(19) Europäisches Patentamt / European Patent Office / Office européen des brevets

(11) **EP 2 828 507 B1**

(12) **EUROPÄISCHE PATENTSCHRIFT**

(45) Veröffentlichungstag und Bekanntmachung des Hinweises auf die Patenterteilung:
**24.02.2016 Patentblatt 2016/08**

(51) Int Cl.:
**F02C 7/12** *(2006.01)*    **F02C 7/18** *(2006.01)*
**F02C 9/00** *(2006.01)*    **F02C 9/28** *(2006.01)*

(21) Anmeldenummer: **13714230.3**

(22) Anmeldetag: **21.03.2013**

(86) Internationale Anmeldenummer:
**PCT/EP2013/055925**

(87) Internationale Veröffentlichungsnummer:
**WO 2013/139904 (26.09.2013 Gazette 2013/39)**

(54) **VERFAHREN ZUR BESTIMMUNG WENIGSTENS EINER FEUERUNGSTEMPERATUR FÜR DIE REGELUNG EINER GASTURBINE**

METHOD FOR DETERMINING AT LEAST ONE FIRING TEMPERATURE FOR THE CONTROL OF A GAS TURBINE

PROCÉDÉ DE DÉTERMINATION D'AU MOINS UNE TEMPÉRATURE DE COMBUSTION POUR LE RÉGLAGE D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2012 EP 12161134**

(43) Veröffentlichungstag der Anmeldung:
**28.01.2015 Patentblatt 2015/05**

(73) Patentinhaber: **ALSTOM Technology Ltd**
**5400 Baden (CH)**

(72) Erfinder:
• **ARIAS CHAO, Manuel**
  **CH-8002 Zürich (CH)**
• **NEMET, Anton**
  **CH-5426 Lengnau (CH)**
• **STEIGER, Ulrich Robert**
  **CH-5405 Baden-Dättwil (CH)**
• **LILLEY, Darrel Shayne**
  **CH-5453 Remetschwil (CH)**

(74) Vertreter: **General Electric Technology GmbH**
**CHTI Intellectual Property**
**Brown Boveri Strasse 7**
**5400 Baden (CH)**

(56) Entgegenhaltungen:
**EP-A1- 1 474 595     EP-A1- 1 840 354**
**EP-A2- 1 231 369     EP-A2- 1 959 115**
**EP-A2- 2 224 114     US-A1- 2005 066 664**

**Beschreibung**

TECHNISCHES GEBIET

Die vorliegende Erfindung bezieht sich auf das Gebiet der Gasturbinentechnik. Sie betrifft ein Verfahren zur Bestimmung wenigstens einer Feuerungstemperatur für die Regelung einer Gasturbine gemäss dem Oberbegriff des Anspruchs 1.

STAND DER TECHNIK

Die Feuerungstemperatur wird bei den heute üblichen Gasturbinen als Regelungsparameter unter bestimmten Betriebsbedingungen (Grundlast und Teillast) eingesetzt. Da kontinuierliche und genaue direkte Messungen der Feuerungstemperatur über die gesamte betriebliche Lebensdauer der Gasturbine aus Gründen der Zuverlässigkeit, der mechanischen Integrität und der Genauigkeit gegenwärtig nicht machbar sind, wird das Niveau der Feuerungstemperatur aus einer Vielzahl von gemessenen Prozessvariablen mittels eines Feuerungstemperatur-Bestimmungsverfahrens bestimmt, das in die Gasturbinen-Steuerungslogik einprogrammiert ist.

Ein solches Temperatur-Bestimmungsverfahren kann dazu ausgelegt sein, die Auslasstemperatur der Brennkammer, die Turbineneinlasstemperatur, die Turbinenauslasstemperatur oder eine beliebige andere mit der Verbrennung zusammenhängende Temperatur innerhalb der Gasturbine zu bestimmen, wie dies beispielsweise in den Druckschriften EP 1 231 369 A2 und EP 1 959 115 A2 bzw. US 2010/050591 A1 näher beschrieben ist.

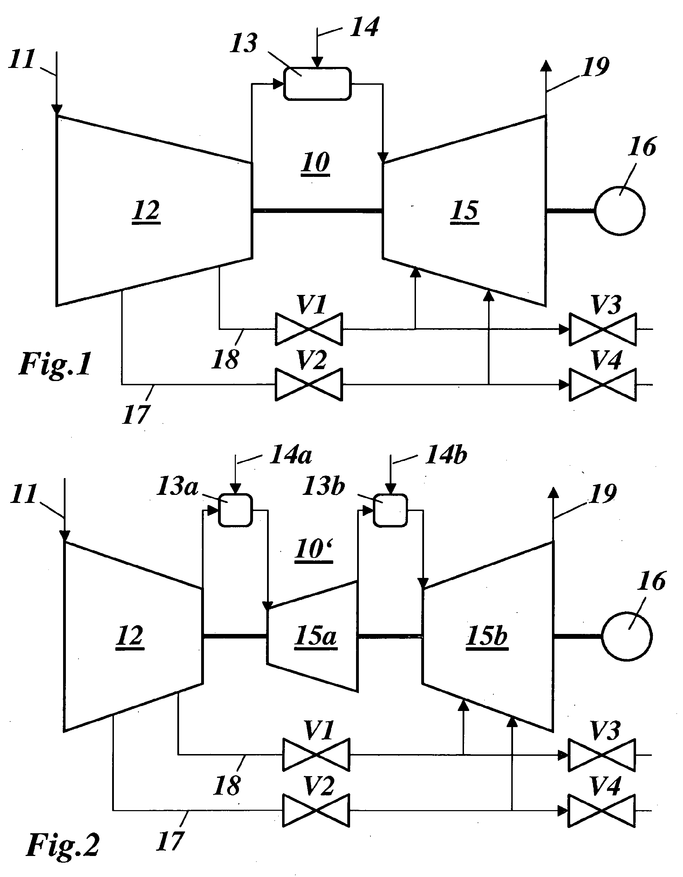

Fortschrittliche Gasturbinen-Betriebs-Konzepte befassen sich mit dem Einsatz einer angepassten Kühlmediums-Versorgung während des Gasturbinen-Betriebs, wie dies beispielsweise in den Druckschriften US 2004/0025491 A1, EP 2 224 114 und US 2004/0221584 A1 offenbart ist. Eine solche Versorgung wird allgemein mit Kühlluft-Regelventilen verwirklicht. Zwei Varianten einer solchen Versorgung sind in Fig. 1 und Fig. 2 schematisch wiedergegeben. Die Gasturbine 10 der Fig. 1 umfasst einen Verdichter 12, eine Brennkammer 13 und eine Turbine 15, die den Verdichter 12 und einen Generator 16 antreibt. Der Verdichter 12 saugt im Betrieb Umgebungsluft 11 an, verdichtet diese und gibt sie an die Brennkammer 13 ab, in die über eine Brennstoffzuleitung 14 Brennstoff eingedüst und mittels der verdichteten Luft verbrannt wird. Das entstehende Heissgas wird in der Turbine 15 unter Abgabe einer Arbeitsleistung entspannt und nach Verlassen der Turbine 15 über einen Abgaskamin 19 nach aussen abgegeben. Zur Kühlung der Turbine 15 wird am Verdichter an verschiedenen Stellen auf unterschiedlichen Druckniveaus verdichtete Luft abgezapft und über Kühlleitungen 17 bzw. 18 zur Turbine 15 geleitet. Die Kühlluft-Massenströme können dabei über Regelventile V1 und V2 eingestellt werden. Über Abblasventile V3 und V4 kann Kühlluft nach aussen abgeblasen werden.

Die Gasturbine 10' der Fig. 2 ist als Gasturbine mit sequenzieller Verbrennung ausgebildet und umfasst daher zwei Brennkammern 13a und 13b mit zwei entsprechenden Brennstoffzuleitungen 14a und 14b und zwei zugeordneten Turbinen 15a und 15b. Im dargestellten Beispiel wird die zweite Turbine 15b über die Kühlleitungen 17 und 18 mit Kühlluft aus dem Verdichter 12 versorgt. Die Funktion der Ventile V1-V4 ist dieselbe wie in Fig. 1.

Darüber hinaus beschreibt auch die Druckschrift US 2005/066664 ein solches Konzept. Die dort vorgestellte Gasturbinenanlage zapft verdichtete Verdichterluft ab und führt sie anschließend über eine externe Kühlleitung in die Turbine ein. Zum Zwecke der Abkühlung der abgezapften Luft und Erhöhung ihrer Kühlwirkung wird sie vor Einleitung in die Turbine durch Eindüsung von Wasser befeuchtet. Über zugeordnete Signalleitungen nimmt eine zentrale Steuereinheit eine Vielzahl von Parametern der Arbeitsmedien auf, darunter auch Druck- und Temperaturwerte sowie Massenstrom der abgezweigten Luft. Zur Einstellung des Kühlluftmassenstroms ist die Kühlluftleitung mit einem von der Steuereinheit ansteuerbaren Stellventil ausgerüstet. Außerdem bestimmt die Steuereinheit auf Basis der gemessenen Parameterwerte eine angenommene Turbineneinlasstemperatur, auf deren Basis sie die Brennstoffzufuhr in die Brennkammer regelt.

Eine Feuerungstemperatur-Regelung während des Betriebs mit einer eingestellten Kühlmediums-Versorgung unter Einsatz der herkömmlichen Feuerungstemperatur-Bestimmungsmethoden kann jedoch zu unerwünschten Abweichungen zwischen der gewünschten und tatsächlichen Feuerungstemperatur führen, und zwar wegen der sich ändernden Betriebslinie der Gasturbine.

DARSTELLUNG DER ERFINDUNG

Hier will die Erfindung Abhilfe schaffen. Es ist daher eine Aufgabe der Erfindung, ein Verfahren zur Bestimmung wenigstens einer Feuerungstemperatur für die Regelung einer Gasturbine anzugeben, welches den Einfluss einer einstellbaren Kühlung der Turbine adäquat berücksichtigt.

Diese und andere Aufgaben werden durch die Gesamtheit der Merkmale des Anspruchs 1 gelöst.

Das erfindungsgemässe Verfahren geht aus von einer Gasturbine, welche wenigstens einen Verdichter, wenigstens eine Brennkammer und wenigstens eine Turbine umfasst, wobei zur Kühlung der Turbine am Verdichter verdichtete Luft abgezapft und über wenigstens eine externe Kühlleitung und ein in der Kühlleitung angeordnetes Regelventil der Turbine zugeführt wird. Bei diesen Verfahren wird eine Mehrzahl von Temperaturen und Drücken des Arbeitsmediums an verschiedenen Stellen der Gasturbine gemessen und aus den gemessenen Temperaturen und Drücken die wenigstens eine Feuerungstemperatur abgeleitet. Das erfindungsgemässe Verfahren ist dadurch gekennzeichnet, dass zusätzlich der Kühlluft-Massenstrom durch die externe Kühlleitung bestimmt und bei der Ableitung der Feuerungstemperatur mit berücksichtigt wird.

Gemäss einer Ausgestaltung des erfindungsgemässen Verfahrens werden zur Bestimmung des Kühlluft-Massenstroms die Stellung des Regelventils und die Drücke vor und hinter dem Regelventil gemessen.

Insbesondere weist das Regelventil eine Ventilcharakteristik auf, wobei die Ventilcharakteristik zur Bestimmung des Kühlluft-Massenstroms herangezogen wird.

Eine andere Ausgestaltung des erfindungsgemässen Verfahrens zeichnet sich dadurch aus, dass zusätzlich an verschiedenen Stellen der Gasturbine der Wasser/Dampf-Gehalt des Arbeitsmediums bestimmt und bei der Ableitung der Feuerungstemperatur mit berücksichtigt wird.

Eine Weiterbildung dieser Ausgestaltung ist dadurch gekennzeichnet, dass die Feuerungstemperatur nach Massgabe der Gleichung

$$T_x = f_1\left(T_7, \frac{p_6}{p_7}, x_d, \frac{p_{10}}{p_{11}}, \theta_1\right)$$

bestimmt wird, wobei

$f_1$ eine Funktion von Termen erster und höherer Ordnung der aufgeführten Variablen ist,
$T_7$ die Temperatur des Arbeitsmediums am Turbinenauslass bezeichnet,
$p_6/p_7$ der Quotient aus Turbineneinlassdruck und Turbinenauslassdruck ist,
$x_d$ den Wasser/Dampf-Gehalt im Arbeitsmedium bezeichnet,
$p_{10}/p_{11}$ der Quotient der Drücke vor und nach dem Regelventil in der Kühlleitung ist, und
$\theta_1$ die Stellung des Regelventils charakterisiert.

Eine Gasturbine zur Durchführung des Verfahrens nach der Erfindung umfasst wenigstens einen Verdichter, wenigstens eine Brennkammer und wenigstens eine Turbine, wobei zur Kühlung der Turbine am Verdichter verdichtete Luft abgezapft und über wenigstens eine externe Kühlleitung und ein in der Kühlleitung angeordnetes Regelventil der Turbine zugeführt wird, wobei an verschiedenen Stellen der Gasturbine eine Mehrzahl von Messstellen Temperaturen und Drücke des Arbeitsmediums vorgesehen und über zugeordnete Signalleitungen mit einer Steuerung verbunden sind, welche Steuerbefehle zur Steuerung der Brennstoffzufuhr an eine Brennstoffzuleitung zur Brennkammer abgibt. Es sind Mittel zur Bestimmung des Kühlluft-Massenstroms durch die externe Kühlleitung vorgesehen.

An dem Regelventil sind Messstellen zur Messung der Drücke vorgesehen und nach dem Regelventil und zur Messung der Stellung des Regelventils sind Signalleitungen mit der Steuerung verbunden.

Insbesondere ist die Steuerung Teil eines geschlossenen Regelkreises zur Regelung einer Feuerungstemperatur der Gasturbine.

KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1    in einem vereinfachten Schema eine Gasturbine mit einer Brennkammer und einer Turbine, wobei die Turbine über externe Kühlleitungen mit komprimierter Luft aus dem Verdichter gekühlt wird;

Fig. 2    in einer zu Fig. 1 vergleichbaren Darstellung eine Gasturbine mit sequenzieller Verbrennung und externer Kühlung der zweiten Turbine; und

Fig. 3    eine zu Fig. 1 vergleichbare Gasturbine mit externer Kühlung der Turbine und Regelung einer Feuerungstemperatur unter Einbeziehung des Kühlluft-Massenflusses gemäss einem Ausführungsbeispiel der Erfindung.

WEGE ZUR AUSFÜHRUNG DER ERFINDUNG

Die vorliegende Erfindung befasst sich mit der Verwendung von Regelventil-Positionsmessungen, Druckmessungen vor und hinter den Regelventilen, Massenstrom-Messungen des Kühlmediums und/oder Ventilcharakteristiken als Eingangsgrössen für die Bestimmung von Feuerungstemperaturen. Unter Berücksichtigung der Vorteile von Feuerungstemperatur-Bestimmungen, wie sie in den Druckschriften EP 1 231 369 A2 und EP 1 959 115 A2 bzw. US 2010/050591 A1 offenbart sind, werden zusätzlich zu den dort eingesetzten Messgrössen weitere Messungen berücksichtigt, insbesondere die Stellung der Regelventile (in den Kühlleitungen), die Druckverhältnisse an den Regelventilen und/oder die entsprechenden Ventilcharakteristiken.

Während der Einfluss eines sich mit den Betriebsbedingungen (umgebungsbedingt und/oder lastbedingt) ändernden Kühlluft-Massenstroms bereits ausführlich untersucht und für eine feststehende Kühlluftversorgung hinreichend gut bekannt ist (siehe die erwähnten EP 1 231 369 A2 und EP 1 959 115 A2 bzw. US 2010/050591 A1), wurden die Stellung der zugehörigen Regelventile, die Drücke vor und hinter den Regelventilen und die Ventilcharakteristiken der Regelventile bisher innerhalb der geschlossenen Regelschleife nicht als Eingangsgrössen zur Bestimmung der Feuerungstemperatur eingesetzt.

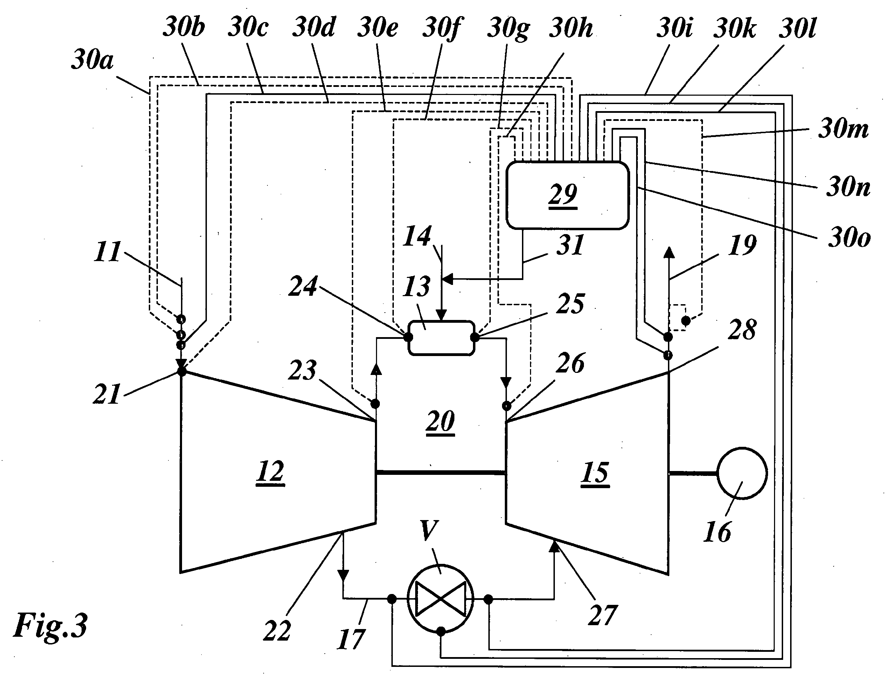

Gemäss dem in Fig. 3 dargestellten Ausführungsbeispiel umfasst eine Gasturbine 20 zur Durchführung des Verfahrens wenigstens einen Verdichter 12, wenigstens eine Brennkammer 13 und wenigstens eine Turbine 15. Die Turbine 15 ist über wenigstens eine externe Kühlleitung 17 mit dem Verdichter 12 verbunden. Zur Steuerung des Kühlluft-Massenstroms ist wenigstens ein Regelventil V in dieser Kühlleitung 17 angeordnet.

Weiterhin ist wenigstens eine Steuerung 29 vorgesehen, mit der in einer geschlossenen Regelschleife eine oder mehrere Feuerungstemperaturen mit dem erfindungsgemässen Verfahren geregelt werden, und der als Eingangssignale über entsprechende Signalleitungen 30a-o Messgrössen zugeführt werden, die in der Steuerung 29 verarbeitet werden und zu Steuerbefehlen 31 führen, mit denen (z.B. an der Brennstoffzuleitung 14) die Feuerungstemperaturen eingestellt werden. Die Steuerung 29 enthält einen Steuerungsrechner, der die Vielzahl der Messwerte für die Temperaturen und Drücke des Arbeitsmediums an verschiedenen Stellen der Gasturbine 20 verarbeitet.

Die folgenden Schritte führen zu den gewünschten Feuerungstemperaturen:

- Es wird eine Vielzahl von Temperaturen des Arbeitsmediums an verschiedenen Stellen in der Gasturbine gemessen.

- Es wird eine Vielzahl von Drücken des Arbeitsmediums an verschiedenen Stellen in der Gasturbine gemessen.

- Es wird der Wassergehalt des Arbeitsmediums an verschiedenen Stellen in der Gasturbine bestimmt, wie dies in den Druckschriften EP 1 959 115 A2 bzw. US 2010/050591 A1 beschrieben ist. Dabei ist hier festzuhalten, dass die gemessene Feuchte nicht unmittelbar als Korrekturgrösse in die Bestimmung der Feuerungstemperatur eingeht, sondern lediglich als "Kalibriergrösse" für die Anpassung des Referenzdruckes am Turbineneintritt infolge alterungsbedingter Effekte eingesetzt wird. Die Veränderung des Turbineneintrittsdruckes in Funktion aller eingespritzten Wassermengen - sowohl Ansaugluftkühlung (Inlet Cooling) als auch in die Brennkammer - wird als eigentlicher Korrekturterm für die Bestimmung der Feuerungstemperatur verwendet. Davon ausgehend, wird erfindungsgemäss eine Punktualisierung vorgenommen, wonach die Veränderung des Turbineneintrittsdruckes in Funktion des Feuchtegehalts relativ zu einem Referenzwert des Turbineneintrittsdruckes die eigentliche Korrekturgrösse ist. Gleichzeitig wird die Feuchteinformation nunmehr für die "Kalibrierung" der alterungsbedingten Veränderung des Referenzwertes verwendet.

- Es werden die Stellung des Regelventils V in der Kühlleitung 17 (der Regelventile) sowie die Drücke vor und hinter dem Regelventil (den Regelventilen) gemessen.

- Es wird die Ventilcharakteristik des bzw. der Regelventil(e) bereitgestellt (reduzierter Massenstrom $m_{red}$ oder Druckverlust Koeffizient $\zeta$ in Abhängigkeit von Winkelposition und Druckreduzierung).

Gemäss der Erfindung werden die Messungen der Regelventil-Position, der Drücke vor und hinter den Regelventilen, oder Messungen des Kühlluft-Massenstroms und/oder Ventilcharakteristiken verwendet, um die Feuerungstemperaturen abzuleiten. Eine oder mehrere Feuerungstemperaturen in der Gasturbine können automatisch durch die Rechnersteuerung als Funktion des Betriebspunktes in der Ventilcharakteristik oder, mit anderen Worten, als Funktion des Kühlluft-Massenstroms gesetzt werden. Der Einfluss einer Änderung des Kühlluft-Massenstroms als Folge einer aktiven Regelventil-Regelung wird durch eine mathematische Korrelation im Algorithmus der Regelschleife für die Feuerungstemperaturen berücksichtigt.

Durch die Einbeziehung der Änderungen des Kühlluft-Massenstroms in die Regelung der Feuerungstemperaturen ist es möglich, eine verbesserte Regelungsgenauigkeit für die Feuerungstemperaturen zu erreichen, und zwar über einen breiten Bereich von umweltbedingten und lastbedingten Betriebs-Bedingungen.

Die nachfolgende Struktur der geschlossenen Regelschleife ist für die Regelung der Feuerungstemperaturen definiert. $T_x$ bezeichnet dabei eine oder mehrere Feuerungstemperaturen, die der geschlossenen Regelung in der Gasturbine unterliegen:

Die Feuerungstemperatur $T_x$ wird nach Massgabe der Gleichung

$$T_x = f_1\left(T_7, \frac{p_6}{p_7}, x_d, \frac{p_{10}}{p_{11}}, \theta_1\right)$$

bestimmt, wobei

$f_1$ eine Funktion von Termen erster und höherer Ordnung der aufgeführten Variablen ist,
$T_7$ die Temperatur des Arbeitsmediums am Turbinenauslass bezeichnet,
$p_6/p_7$ der Quotient aus Turbineneinlassdruck und Turbinenauslassdruck ist,
$x_d$ den Wasser/Dampf-Gehalt im Arbeitsmedium bezeichnet,
$p_{10}/p_{11}$ der Quotient der Drücke vor und nach dem Regelventil (V) in der Kühlleitung (17) ist, und
$\theta_1$ die Stellung des Regelventils (V) charakterisiert.

Für den Quotienten $p_6/p_7$ gilt dabei:

$$\frac{T_6}{T_7} = \left(\frac{p_6}{p_7}\right)^{\frac{n-1}{n}} = \left(\frac{p_6}{p_7}\right)^{\eta_p \frac{\kappa-1}{\kappa}}$$

mit der Turbineneinlasstemperatur $T_6$ und der Turbinenauslasstemperatur $T_7$ und dem polytropen Turbinenwirkungsgrad $\eta_p$.

Die Einbeziehung von $p_{10}/p_{11}$ und $\theta_1$ korrespondiert zur Notwendigkeit, den angepassten Kühlmediums-Massenstrom im polytropen Turbinenwirkungsgrad $\eta_p$ zu berücksichtigen. Der Effekt kann berücksichtigt werden durch den Betriebspunkt des Kühlluft-Regelventils V (Stellung $\theta_1$ und Druckverhältnis $p_{10}/p_{11}$), um die Änderungen im Kühlluft-Massenstrom $m_{10}$ in der Kühlluftleitung im Verhältnis zu einer Referenzposition des Regelventils in einem bekannten Kühlsystem zu erhalten.

Der Einfluss von $m_{10}$ in den Grössen $p_6/p_7$ und $T_7$ ist wie folgt ($m_2$ bezeichnet den Massenstrom der angesaugten Umgebungsluft 11):

$$\frac{p_6}{p_7} = f_2\left(m_{10}/m_2\right),$$

sowie

$$T_7 = f_3\left(m_{10}/m_2\right),$$

und

$$\frac{p_6}{p_7} = g_2\left(\frac{p_6}{p_{7\,ref}}, \frac{p_{10}}{p_{11}}, \theta_1\right),$$

sowie

$$T_7 = g_3\left(T_{ref}, \frac{p_{10}}{p_{11}}, \theta_1\right),$$

wobei $f_2$, $f_3$, $g_2$ und $g_3$ funktionsmässig durch Terme erster und höherer Ordnung repräsentiert werden.

Gemäss Fig. 3 werden zur Regelung der Feuerungstemperaturen die folgenden Messgrössen über zugeordnete Signalleitungen 30a-o an die Steuerung 29 übermittelt:

| | | | |
|---|---|---|---|
| 1. | Signalleitung 30a: | Umgebungstemperatur $T_1$; |
| 2. | Signalleitung 30b: | Umgebungsdruck $p_1$; |
| 3. | Signalleitung 30c: | Verdichtereinlasstemperatur $T_2$; |
| 4. | Signalleitung 30d: | Stellung der verstellbaren Einlassleitschaufeln $\varphi_1$; |
| 5. | Signalleitung 30e: | Verdichterauslassdruck $p_3$; |
| 6. | Signalleitung 30f: | Brennkammereinlassdruck $p_4$; |
| 7. | Signalleitung 30g: | Brennkammerauslassdruck $p_5$; |
| 8. | Signalleitung 30h: | Turbineneinlassdruck $p_6$; |
| 9. | Signalleitung 30i: | Druck vor dem Regelventil V, $p_{10}$; |
| 10. | Signalleitung 30k: | Stellung des Regelventils V, $\theta_1$; |
| 11. | Signalleitung 30l: | Druck nach dem Regelventil V, $p_{11}$; |
| 12. | Signalleitung 30m: | Umgebungsdruck $p_1$; |
| 13. | Signalleitung 30n: | Turbinenauslasstemperatur $T_7$; und |
| 14. | Signalleitung 30o: | Turbinenauslassdruck $p_7$. |

Der Turbinenauslassdruck $p_7$ kann dabei auch durch den Umgebungsdruck $p_1$ und den Druckverlust vom Turbinenauslass zum Abgaskamin 19 ersetzt werden.

BEZUGSZEICHENLISTE

| | |
|---|---|
| 10,10' | Gasturbine |
| 11 | Umgebungsluft |
| 12 | Verdichter |
| 13,13a,b | Brennkammer |
| 14,14a,b | Brennstoffzuleitung |
| 15,15a,b | Turbine |
| 16 | Generator |
| 17,18 | Kühlleitung |
| 19 | Abgaskamin |
| 20 | Gasturbine |
| 21 | Verdichtereinlass |
| 22 | Anzapfstelle (Verdichter) |
| 23 | Verdichterauslass |
| 24 | Brennkammereinlass |
| 25 | Brennkammerauslass |
| 26 | Turbineneinlass |
| 27 | Kühleinlass (Turbine) |
| 28 | Turbinenauslass |
| 29 | Steuerung |
| 30a-o | Signalleitung |
| 31 | Steuerbefehl |
| V,V1,2 | Regelventil |
| V3,4 | Abblasventil |

**Patentansprüche**

1. Verfahren zur Bestimmung wenigstens einer Feuerungstemperatur ($T_x$) für die Regelung einer Gasturbine (20), welche wenigstens einen Verdichter (12), wenigstens eine Brennkammer (13) und wenigstens eine Turbine (15) umfasst, wobei zur Kühlung der Turbine (15) am Verdichter (12) verdichtete Luft abgezapft und über wenigstens eine externe Kühlleitung (17) und ein in der Kühlleitung (17) angeordnetes Regelventil (V) der Turbine (15) zugeführt wird, bei welchem Verfahren eine Mehrzahl von Temperaturen und Drücken des Arbeitsmediums an verschiedenen Stellen der Gasturbine gemessen und aus den gemessenen Temperaturen und Drücken die wenigstens eine Feuerungstemperatur ($T_x$) abgeleitet wird, **dadurch gekennzeichnet, dass** zusätzlich der Kühlluft-Massenstrom durch die externe Kühlleitung (17) bestimmt und bei der Ableitung der Feuerungstemperatur ($T_x$) mitberücksichtigt wird.

2. Verfahren nach Anspruch 1, **dadurch gekennzeichnet, dass** die Feuerungstemperatur ($T_x$) eine Korrekturgrösse aufweist, welche durch die Veränderung des Turbineneintrittsdruckes in Funktion des Feuchtegehalts relativ zu einem Referenzwert des Turbineneintrittsdruckes bestimmt wird.

3. Verfahren nach Anspruch 2, **dadurch gekennzeichnet, dass** der Feuchtegehalt für die Kalibrierung der alterungsbedingten Veränderung des Referenzwertes verwendet wird.

4. Verfahren nach einem der Ansprüche 1-3, **dadurch gekennzeichnet, dass** zur Bestimmung des Kühlluft-Massenstroms die Stellung des Regelventils (V) und die Drücke vor und hinter dem Regelventil (V) gemessen werden.

5. Verfahren nach Anspruch 4, **dadurch gekennzeichnet, dass** das Regelventil (V) eine Ventilcharakteristik aufweist, und dass die Ventilcharakteristik zur Bestimmung des Kühlluft-Massenstroms herangezogen wird.

6. Verfahren nach einem der Ansprüche 1-5, **dadurch gekennzeichnet, dass** die Feuerungstemperatur ($T_x$) nach Massgabe der Gleichung

$$T_x = f_1\left(T_7, \frac{p_6}{p_7}, x_d, \frac{p_{10}}{p_{11}}, \theta_1\right)$$

bestimmt wird, wobei $f_1$ eine Funktion von Termen erster und höherer Ordnung der aufgeführten Variablen ist, $T_7$ die Temperatur des Arbeitsmediums am Turbinenauslass bezeichnet, $p_6/p_7$ der Quotient aus Turbineneinlassdruck und Turbinenauslassdruck ist, $x_d$ den Wasser/Dampf-Gehalt im Arbeitsmedium bezeichnet, $p_{10}/p_{11}$ der Quotient der Drücke vor und nach dem Regelventil (V) in der Kühlleitung (17) ist, und $\theta_1$ die Stellung des Regelventils (V) charakterisiert.

**Claims**

1. Method for determining at least one firing temperature ($T_x$) for controlling a gas turbine (20) comprising at least one compressor (12), at least one combustion chamber (13) and at least one turbine (15), wherein, for cooling the turbine (15), compressed air is extracted at the compressor (12) and is fed to the turbine (15) via at least one external cooling line (17) and a controlling valve (V) arranged in the cooling line (17), in which method a plurality of temperatures and pressures of the working medium are measured at various points in the gas turbine and the at least one firing temperature ($T_x$) is derived from the measured temperatures and pressures, **characterized in that**, in addition, the cooling air mass flow rate through the external cooling line (17) is determined and is taken into account when deriving the firing temperature ($T_x$).

2. Method according to Claim 1, **characterized in that** the firing temperature ($T_x$) has a correction factor which is determined by the change in the turbine inlet pressure as a function of the moisture content relative to a reference value of the turbine inlet pressure.

3. Method according to Claim 2, **characterized in that** the moisture content is used for calibrating the aging-induced change in the reference value.

4. Method according to one of Claims 1-3, **characterized in that** the position of the controlling valve (V) and the pressures upstream and downstream of the controlling valve (V) are measured in order to determine the cooling air mass flow rate.

5. Method according to Claim 4, **characterized in that** the controlling valve (V) has a valve characteristic, and **in that** the valve characteristic is used for determining the cooling air mass flow rate.

6. Method according to one of Claims 1-5, **characterized in that** the firing temperature ($T_x$) is determined according to the equation

$$T_x = f_1\left(T_7, \frac{p_6}{p_7}, x_d, \frac{p_{10}}{p_{11}}, \theta_1\right)$$

where $f_1$ is a function of first- and higher-order terms of the expressed variables, $T_7$ denotes the temperature of the working medium at the turbine outlet, $p_6/p_7$ is the quotient of turbine inlet pressure and turbine outlet pressure, $x_d$ denotes the water/steam content in the working medium, $p_{10}/p_{11}$ is the quotient of the pressures upstream and downstream of the controlling valve (V) in the cooling line (17), and $\theta_1$ characterizes the position of the controlling valve (V).

**Revendications**

1. Procédé de détermination d'au moins une température de combustion ($T_x$) pour la régulation d'une turbine à gaz (20), qui comprend au moins un compresseur (12), au moins une chambre de combustion (13) et au moins une turbine (15), de l'air comprimé étant prélevé au niveau du compresseur (12) en vue de refroidissement de la turbine (15) et étant acheminé à la turbine (15) par le biais d'au moins une conduite de refroidissement externe (17) et d'une soupape de régulation (V) disposée dans la conduite de refroidissement (17), dans lequel procédé une pluralité de températures et de pressions du fluide de travail sont mesurées à différents endroits de la turbine à gaz et à partir des températures et des pressions mesurées, l'au moins une température de combustion ($T_x$) est déduite, **caractérisé en ce qu'**en outre, le débit massique d'air de refroidissement à travers la conduite de refroidissement externe (17) est déterminé et est pris en compte lors de la déduction de la température de combustion ($T_x$).

2. Procédé selon la revendication 1, **caractérisé en ce que** la température de combustion ($T_x$) présente une grandeur de correction qui est déterminée par la variation de la pression à l'entrée de la turbine en fonction du taux d'humidité par rapport à une valeur de référence de la pression à l'entrée de la turbine.

3. Procédé selon la revendication 2, **caractérisé en ce que** le taux d'humidité est utilisé pour l'étalonnage de la modification de la valeur de référence en fonction du vieillissement.

4. Procédé selon l'une quelconque des revendications 1 à 3, **caractérisé en ce que** pour déterminer le débit massique d'air de refroidissement, la position de la soupape de régulation (V) et les pressions avant et après la soupape de régulation (V) sont mesurées.

5. Procédé selon la revendication 4, **caractérisé en ce que** la soupape de régulation (V) présente une caractéristique de soupape et **en ce que** la caractéristique de soupape est utilisée pour déterminer le débit massique d'air de refroidissement.

6. Procédé selon l'une quelconque des revendications 1 à 5, **caractérisé en ce que** la température de combustion ($T_x$) est déterminée en fonction de la relation

$$T_x = f_1\left(T_7, \frac{p_6}{p_7}, x_d, \frac{p_{10}}{p_{11}}, \theta_1\right),$$

$f_1$ étant une fonction de termes de premier ordre et d'ordre supérieur des variables citées, $T_7$ désignant la température du fluide de travail à la sortie de la turbine, $p_6/p_7$ étant le quotient de la pression à l'entrée de la turbine et de la pression à la sortie de la turbine, $x_d$ étant le taux d'humidité/de vapeur dans le fluide de travail, $p_{10}/p_{11}$ étant le quotient des pressions avant et après la soupape de régulation (V) dans la conduite de refroidissement (17), et $\theta_1$ caractérisant la position de la soupape de régulation (V).

Fig.1

Fig.2

Fig.3

EP 2 828 507 B1

**IN DER BESCHREIBUNG AUFGEFÜHRTE DOKUMENTE**

**In der Beschreibung aufgeführte Patentdokumente**

- EP 1231369 A2
- EP 1959115 A2
- US 2010050591 A1
- US 20040025491 A1
- EP 2224114 A
- US 20040221584 A1
- US 2005066664 A